# EUROPEAN PATENT APPLICATION

(11) **EP 1 536 638 A1**
(43) Date of publication of application: **01.06.2005**
(21) Application number: 03733537.9
(22) Date of filing: 23.06.2003
(51) Int. Cl.: H04N 5/76

(54) **METADATA PREPARING DEVICE, PREPARING METHOD THEREFOR AND RETRIEVING DEVICE**

(30) Priority: 24.06.2002 JP 2002182506; 01.11.2002 JP 2002319756; 01.11.2002 JP 2002319757; 19.11.2002 JP 2002334831
(71) Applicant: MATSUSHITA ELECTRIC INDUSTRIAL CO., LTD., Kadoma-shi, Osaka 571-8501 (JP)
(72) Inventor: KOBAYASHI, Masaaki, Kawanishi-shi, Hyogo 666-0137 (JP); SAKAI, Hiroyuki, Machida-shi, Tokyo 194-0004 (JP); MATSUI, Kenji, Ikoma-shi, Nara 630-0136 (JP); KUWANO, Hiroyasu, Yamato-shi, Kanagawa 242-0002 (JP); SHIMOTASHIRO, Masafumi, Katano-shi, Osaka 576-0012 (JP); YASUKATA, Mitsuru, Neyagawa-shi, Osaka 572-0003 (JP); ENDOH, Mitsuru, Setagaya-ku, Tokyo 156-0043 (JP)
(74) Representative: Tothill, John Paul
(86) International application number: PCT/JP2003/007908
(87) International publication number: WO 2004/002144

(57) **Abstract**

A metadata preparing device comprising a content reproducing unit (1) for reproducing and outputting content, a monitor (3) for monitoring the content reproduced by the content reproducing unit, a voice input unit (4), a voice recognition unit (5) for recognizing a voice signal input from the voice input unit, a metadata generation unit (6) for converting information recognized by the voice recognition unit into metadata, and an identification information imparting unit (7) for acquiring identification information that identifies respective parts in the content from the reproduced content supplied from the content reproducing unit, for imparting to metadata, wherein the generated metadata is so constructed as to be associated with respective parts in the content.

## Description

### TECHNICAL FIELD

The present invention relates to metadata production devices and metadata production methods for producing metadata concerning video or audio content or the like that has been created. The present invention further relates to search devices searching for content with the produced metadata.

### BACKGROUND ART

In recent years, video or audio content or the like that has been created is provided with metadata that is related to such content.

However, for the conventional task of attaching metadata, it was common to confirm the information that is supposed to serve as metadata while replaying the created video or audio content, based on a scenario or narration script of the created video or audio content, and to produce the metadata by manually entering it into the computer. Consequently, the production of metadata required considerable effort.

JP H09-130736A discloses a system that attaches tags using voice recognition while shooting with a camera. However, this system is used at the same time as the picture-taking, and cannot be applied for attaching metadata to content that has already been created.

### DISCLOSURE OF THE INVENTION

It is thus an object of the present invention to solve the above-described problems, and to provide a metadata production device and a metadata production method, with which metadata can be created easily by voice input for already created content.

It is another object of the present invention to provide a search device, with which content can be easily searched using thus produced metadata.

A metadata production device according to the present invention includes: a content reproduction portion that reproduces and outputs content; a voice input portion; a voice recognition portion that recognizes voice signals that are input from the voice input portion; a metadata generation portion that converts information recognized by the voice recognition portion into metadata; and an identification information attaching portion that obtains identification information for identifying positions within the content from the reproduced content that is supplied from the content reproduction portion and attaches the identification information to the metadata; whereby the generated metadata is associated with positions in the content.

A method for producing metadata of the present invention, includes:
voice-inputting information related to a given content; subjecting the input voice signal to voice recognition with a voice recognition device; converting voice-recognized information into metadata; and attaching identification information provided to the content for identifying positions in the content to
the metadata, thereby associating the generated metadata with the positions
in the content.

A metadata search device according to the present invention includes a content database that reproduces and outputs content; a voice input portion that converts voice signals of entered keywords into data with a clock signal that is synchronized with a synchronization signal of the reproduced content; a voice recognition portion that recognizes the keywords from the voice signal data that have been converted into data by the voice input portion; a file processing portion that produces a metadata file by combining the keywords output from the voice recognition portion with time codes that indicate a time position of an image signal that is included in the content; a content information file processing portion that generates a control file controlling a relation between the metadata file and recording positions of the content file; a recording portion that records the content file, the metadata file and the control file; and a search portion that extracts a recording position corresponding to the keyword of the content file by specifying the metadata files in which an entered search keyword is included, and referencing the control file. The recording position of the content file corresponds to the recording position in the recording portion.

### BRIEF DESCRIPTION OF THE DRAWINGS

FIG. 1 is a block diagram showing the configuration of a metadata production device according to Embodiment 1 of the present invention.
FIG. 2 is a diagram showing an example of metadata to which a time code is attached in accordance with Embodiment 1 of the present invention.
FIG. 3 is a block diagram showing the configuration of a metadata production device according to Embodiment 2 of the present invention.
FIG. 4 is a diagram showing an example of a still-picture content/metadata display portion in that device.
FIG. 5 is a block diagram showing another configuration of a metadata production device according to Embodiment 2 of the present invention.
FIG. 6 is a block diagram showing the configuration of a metadata production device according to Embodiment 3 of the present invention.
FIG. 7 is a diagram showing an example of the dictionary DB in the device of that embodiment.
FIG. 8 is a diagram showing a recipe that is an example of a content scenario to which the device of this embodiment can be applied.
FIG. 9 is a diagram of data in text format showing an example of a metadata file produced with the device of this embodiment.
FIG. 10 is a block diagram showing the configuration of a metadata production device according to Embodiment 4 of the present invention.
FIG. 11 is a diagram showing an example of an information file produced with the device of this embodiment.
FIG. 12 is a block diagram showing the configuration of a metadata search device according to Embodiment 5 of the present invention.
FIG. 13 is a block diagram showing the configuration of a metadata production device according to Embodiment 6 of the present invention.

### BEST MODE FOR CARRYING OUT THE INVENTION

With the metadata production device according to the present invention, metadata or tags are produced by voice input using voice recognition for the production of metadata or the attachment of tags related to the content, and the metadata or tags are associated with the content times or scenes. Thus, metadata that conventionally used to be produced by keyboard input can be produced automatically by voice input. It should be noted that "metadata" means a set of tags, and what is referred to as "metadata" throughout this specification also includes the tags themselves. Moreover, "content" is used to mean anything that is ordinarily referred to as content, such as created video, audio content, still-picture content, or video and audio content in a database or the like.

It is preferable that the metadata production device further comprises a dictionary related to the content, wherein, when the voice signals input from the voice input portion are recognized by the voice recognition portion, the recognition is performed in association with the dictionary. With this configuration, it is possible to input, as voice signals, keywords that have been extracted beforehand from created content scenarios or the like, to set a dictionary field based on the scenario, and to assign a priority ranking to the keywords, so that metadata can be generated efficiently and accurately with the voice recognition means.

Furthermore, the voice signals may be recognized by the voice recognition portion word by word in association with the dictionary. It is also preferable that the metadata production device further comprises an information processing portion including a keyboard, and the metadata can be corrected through the information processing portion by input from the keyboard. Time code information that is attached to the content may be used as the identification information. Alternatively, content addresses, numbers or frame numbers attached to the content may be used as the identification information. Moreover, the content may be still-picture content, and the addresses of the still-picture content may be used as the identification information.

As an application example of the present invention, the metadata production device may be configured as follows: The content reproduction portion is configured by a content database, and the voice input portion supplies to the voice recognition portion voice signals of entered keywords that are converted into data with a clock signal that is synchronized with a synchronization signal supplied from the content database. The voice recognition portion is configured to recognize the keywords from the voice signal data that have been converted into data by the voice input portion. And the metadata generation portion is configured as a file processing portion that produces a metadata file by using, as the identification information, a time code that indicates a time position of an image signal included in the content, and combining the keywords that are output from the voice recognition portion with that time code.

With this configuration, metadata can be attached efficiently, even in intervals of several seconds. Consequently, it is possible to produce metadata of short time intervals, which used to be difficult with conventional keyboard input.

In this configuration, it is preferable that the metadata production device further comprises a recording portion that records the content that is supplied from the content database together with the metadata file as a content file. It is also preferable that the metadata production device further comprises a content information file processing portion that generates a control file controlling the relation between the metadata file and recording positions at which the content file is to be recorded, and the control file is recorded in the recording portion together with the content file and the metadata file. It is also preferable that the metadata production device further comprises a dictionary database, wherein the voice recognition portion can select a dictionary of a genre corresponding to the content from a plurality of genre-dependent dictionaries. It is further preferable that keywords related to the content can be supplied to the voice recognition portion, and that the voice recognition portion is configured to recognize those keywords with higher priority.

In the method for producing metadata, it is preferable that information related to the content is voice-input while displaying the content on a reproduction monitor. It is furthermore preferable that a dictionary related to the content is used, and the input voice signals are recognized by the voice recognition device through association with the dictionary. It is furthermore preferable that time code information that is attached to the content is used as the identification information. It is also preferable that the content is still-picture content, and the addresses of the still-picture content are used as the identification information.

With the metadata search device of the present invention, it is possible quickly to search the desired location of content based on metadata, by using a control file indicating the recording positions of the content and a metadata file indicating metadata and time codes

In the metadata search device of the present invention, it is preferable that the control file output from the content information file processing portion is devised as a table that lists recording positions of content in the recording portion in accordance with a recording time of the content, and the recording position of the content can be searched from the time code.

It is furthermore preferable that the metadata search device further comprises a dictionary database, and a keyword supply portion that supplies keywords related to the content into the voice recognition portion, and that the voice recognition portion can select a dictionary of a genre corresponding to the content from a plurality of genre-dependent dictionaries, and the voice recognition portion is configured to recognize those keywords with higher priority.

It is furthermore preferable that the metadata search device further comprises a dictionary database, that the voice recognition portion can select a dictionary of a genre corresponding to the content from a plurality of genre-dependent dictionaries, and that the search portion is configured to search by keywords that are chosen from a common dictionary used by the voice recognition portion.

The following is a more detailed explanation of the invention, with reference to the accompanying drawings.

### Embodiment 1

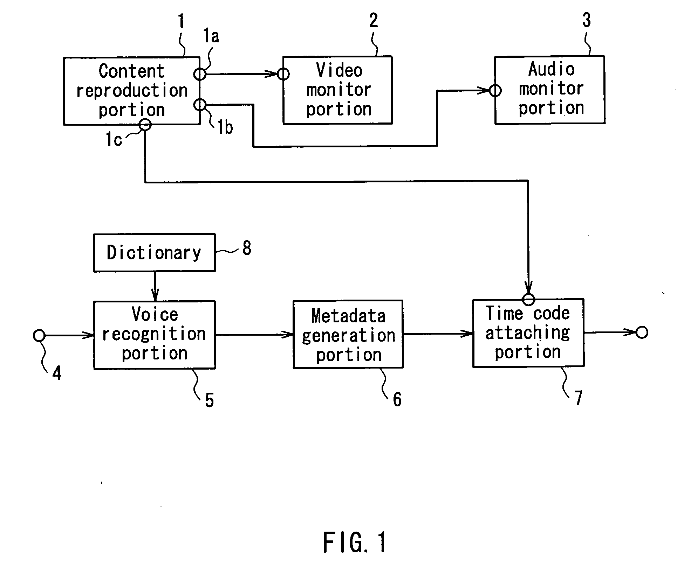

FIG. 1 is a block diagram showing the configuration of a metadata production device according to Embodiment 1 of the present invention. A content reproduction portion 1 is an element for confirming the created content during the production of metadata. The output of the content reproduction portion 1 is supplied to a video monitor 2, an audio monitor 3 and a time code attaching portion 7. A microphone 4 is provided as a voice input portion for metadata production. The voice that is input with the mike 4 is supplied to the voice recognition portion 5. The voice confirmation portion 5 is connected with a dictionary 8 for voice recognition, and can reference the data in the dictionary 8. The recognition output of the voice recognition portion 5 is supplied to a metadata generation portion 6, and the produced metadata is supplied to a time code attaching portion 7, from which it can be output to the outside.

The content reproduction portion 1 may be configured with a video/audio signal reproduction device such as a VTR, a hard-disk device or an optical disk device, a video/audio signal reproduction device using a memory means such as a semiconductor memory as a recording medium, or a video/audio signal reproduction device reproducing video/audio signals that are supplied by transmission or broadcasting.

The reproduced video signals are supplied from the video signal output terminal 1a of the content reproduction portion 1 to the video monitor 2. The reproduced voice signals are supplied from the voice signal output terminal 1b to the audio monitor 3. The reproduced time codes are supplied from the time code output terminal 1c to the time code attaching portion 7. It should be noted that the video monitor 2 and the audio monitor 3 are not necessarily required as elements of the metadata production device, and it is sufficient if they can be connected and used as necessary.

When producing the metadata, the operator utters the metadata to be input so as to be entered into the microphone 4, while checking either the video monitor 2 or the audio monitor 3 or both, and if necessary referencing the scenario or narration script. The voice signals that are output from the microphone 4 are supplied to the voice recognition portion 5. Moreover, if necessary, the data of the dictionary 8 for voice recognition is referenced by the voice recognition portion 5. The voice data that has been recognized by the voice recognition portion 5 is supplied to the metadata generation portion 6 and converted into metadata.

Thus generated metadata is provided with the time code information that is captured from the reproduced content and supplied from the content reproduction portion 1, by the time code attaching portion 7, in order to attach information that associates the time or scene of each portion of the content with the metadata.

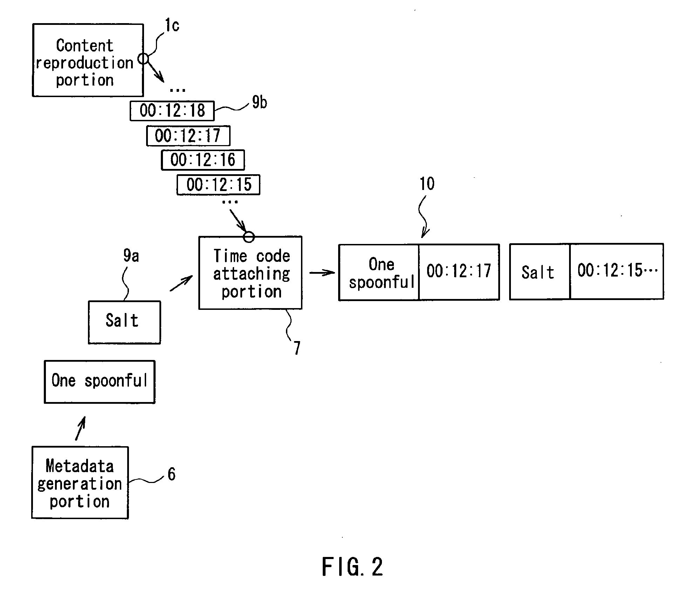

In order to explain the above operation in more detail, let us imagine for example a scenario in which the content is a cooking description. In this case, when the operator utters "salt: one spoonful" into the microphone 4 while checking the display screen of the video monitor 2, then "salt" and "one spoonful" are recognized by the voice recognition portion 5 through looking up the dictionary 8, and converted into the data "salt" and "one spoonful" by the metadata generation portion 6. It should be noted that there is no particular limitation to the configuration of the voice recognition portion 5, and it is sufficient if the voice recognition is performed using any of the commonly used voice recognition means, and the data "salt" and "one spoonful" can be recognized. It should be noted that ordinarily, "metadata" means a set of such tags. As shown in FIG. 2, as the result of this voice recognition, metadata 9a is output from the metadata generation portion 6 and supplied to the time code attaching portion 7.

At the time code attaching portion 7, packet data is generated that is made of time code-attached metadata 10 having a time code attached to it, based on the time code signal 9b supplied from the content reproduction portion 1. The generated metadata may be output as is, or it may be stored on a recording medium, such as a hard disk or the like.

It should be noted that in this example, an example was shown in which the metadata is generated in packet form, but there is no limitation to this.

### Embodiment 2

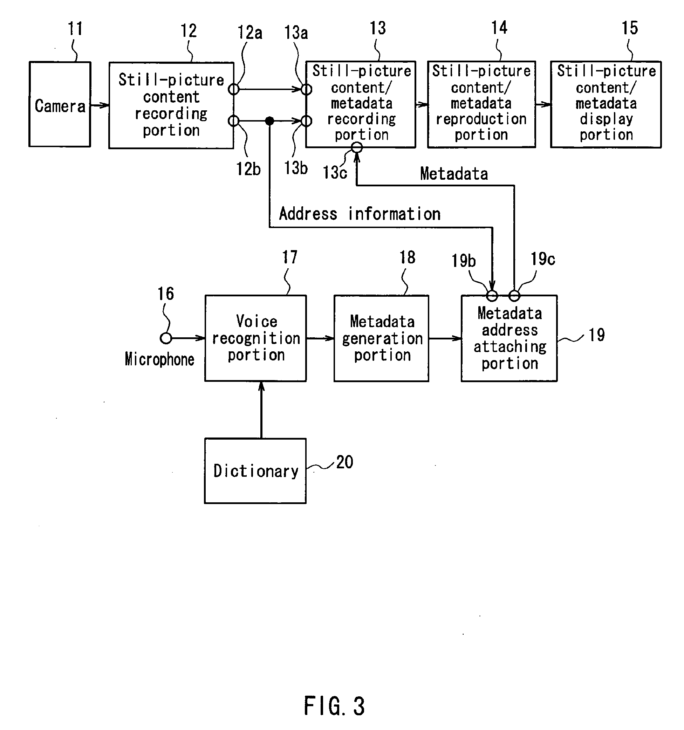

FIG. 3 is a block diagram showing the configuration of a metadata production device according to Embodiment 2 of the present invention. This embodiment is an example in which still-picture content is the subject for the production of metadata. In order to identify the still-picture content, this configuration correlates the generated metadata and the still-picture content using addresses of the content, which correspond to the time code in the case of moving pictures.

In FIG. 3, a camera 11 is an element for still-picture content creation. The output of the camera 11 is recorded by a still-picture content recording portion 12 with address information attached to it. Here, the recorded still-picture content and the address information are supplied to a still-picture content/metadata recording portion 13 for metadata creation. The address information further is supplied to a metadata address attaching portion 19.

A microphone 16 is used for voice input of information relating to the still pictures, and the output of the microphone 16 is given into a voice recognition portion 17. The voice recognition portion 17 is connected with a dictionary 20 for voice recognition, and can reference the data in the dictionary 20. The recognition output of the voice recognition portion 17 is supplied to a metadata generation portion 18, and the produced metadata is supplied to a metadata address attaching portion 19.

The still-picture content and the metadata recorded by the still-picture content/metadata recording portion 13 are reproduced by a still-picture content/metadata reproduction portion 14, and displayed by a still-picture content/metadata display portion 15.

The following is a more detailed description of the operation of a metadata production device with the above-described configuration.

The still-picture content taken with the camera 11 is recorded by the still-picture content recording portion 12 on a recording medium (not shown in the drawings), and address information is attached to it, which is also recorded on the recording medium. The recording medium ordinarily is configured as a semiconductor memory, but there is no limitation to semiconductor memories, and it is also possible to use any other recording medium, for example, a magnetic memory, an optical recording medium or a magneto-optical recording medium. The recorded still-picture content is supplied via an output terminal 12a and an input terminal 13a as well as via an output terminal 12b and an input terminal 13b to the still-picture content/metadata recording portion 13. The address information further is supplied via the output terminal 12b and an input terminal 19b to the metadata address attaching portion 19.

On the other hand, information relating to the still-pictures that have been taken with the camera 11 is entered through the microphone 16 into the voice recognition portion 17. The information relating to the still pictures may be, for example, title, date and time when the picture has been taken, camera operator, location of the picture (where), persons in the picture (who), objects in the picture (what) or the like. Moreover, also the data of the dictionary 20 for voice recognition are supplied to the voice recognition portion 17, as necessary.

The voice data recognized by the voice recognition portion 17 is supplied to the metadata generation portion 18, and is converted into metadata or tags. It should be noted that ordinarily, "metadata" is information relating to the content, and means a set of tags such as title, date and time when the picture has been taken, camera operator, location of the picture (where), persons in the picture (who), objects in the picture (what) or the like. The thus generated metadata or tags are supplied to the metadata address attaching portion 19, in order to attach information that associates them with the still-picture content or scenes. In the metadata address attaching portion 19, the address information supplied from the still-picture content recording portion 12 is attached to the metadata. The address-attached metadata to which the address information has thus been attached is supplied to the still-picture content/metadata recording portion 13 via an output terminal 19c and an input terminal 13c. The still-picture content with a given address is associated by the still-picture content/metadata recording portion 13 with the metadata of the same address and recorded.

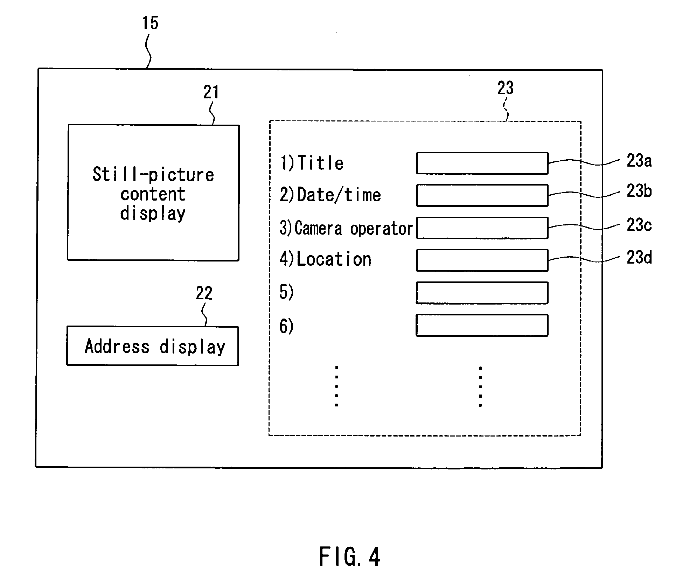

In order to explain the address-attached metadata more specifically, FIG. 4 shows an example of reproducing with the still-picture content/metadata reproducing portion 14 the still-picture content and metadata recorded by the still-picture content/metadata recording portion 13 and displaying them with the still-picture content/metadata display portion 15.

The screen of the still-picture content/metadata display portion 15 in FIG. 4, which is merely an example, is configured by a still-picture content display portion 21, an address display portion 22, and a metadata display region 23. The metadata display region 23 is configured by, for example, 1) a title presentation portion 23a, 2) a date/time presentation portion 23b, 3) a camera operator presentation portion 23c, 4) a shooting location presentation portion 23d etc. This metadata is created from the voice data recognized by the above-described voice recognition portion 17.

The above-described operation is related to the case such as those before taking the still-picture content, at roughly the same time as taking or immediately after taking the still-picture content, etc., in which the creation of the metadata does not necessarily require a confirmation of the still-picture content that has been taken.

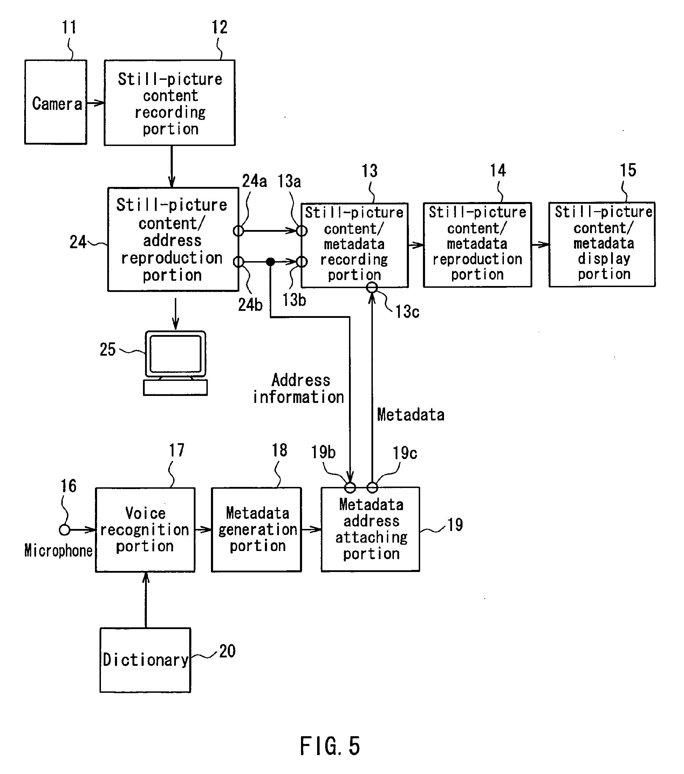

Referring to FIG. 5, the following is an explanation of the case in which the still-picture content is reproduced and metadata is created for the monitored still-picture content, in order to attach afterwards the created metadata to the still-picture content. It should be noted that elements that are the same as in FIG. 3 are denoted by the same numerals, and further explanations regarding their function and the like have been omitted. In this case, a still-picture content/address reproduction portion 24 is arranged between the still-picture content recording portion 12 and the still-picture content/metadata recording portion 13. Furthermore, a monitor 25 is provided, to which the output of the still-picture content/address reproduction portion 24 is supplied.

The still-picture content that is taken with the camera 11 and supplied to the still-picture content recording portion 12 is recorded on a recording medium (not shown in the drawings) and an address is attached to it, which also is recorded on the recording medium. This recording medium is supplied to the still-picture content/address reproduction portion 24. Consequently, still-picture content that already has been created can be reproduced, and the camera 11 and the still-picture content recording portion 12 are not indispensable elements in the metadata production device used for creating metadata for the monitored still-picture content on the monitor.

The still-picture content created with the still-picture content/address reproduction portion 24 is supplied to the monitor 25. The address information that is similarly reproduced is supplied via the output terminal 24b and the input terminal 19b to the metadata address attaching portion 19. The user who creates the metadata utters the words necessary for the metadata creation into the microphone 16, after confirming the still-picture content that is displayed on the monitor 25. Thus, the information relating to the still-pictures taken with the camera 11 is entered via the microphone 16 into the voice recognition portion 17. The information relating to the still pictures may be, for example, title, date and time when the picture has been taken, camera operator, location of the picture (where), persons in the picture (who), objects in the picture (what) or the like. The following operations are the same as those explained for the configuration of FIG. 3.

### Embodiment 3

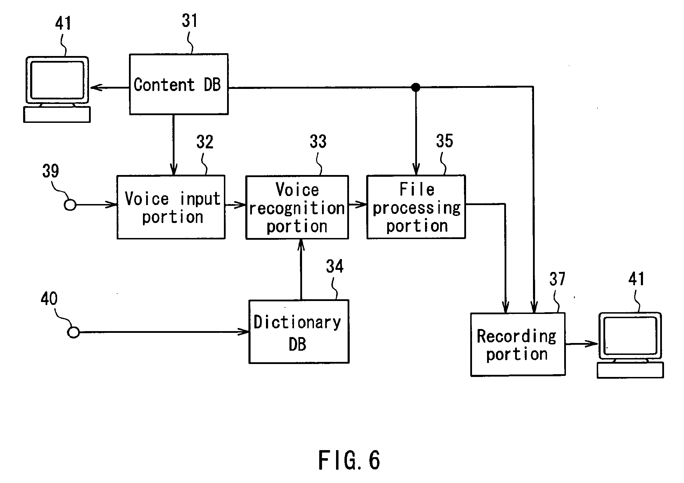

FIG. 6 is a block diagram showing the configuration of a metadata production device according to Embodiment 3 of the present invention. This embodiment is an example in which ordinary digital data content is the subject for the production of metadata. In order to identify the digital data content, this configuration correlates the generated metadata and the digital data content using addresses or numbers of the content.

In FIG. 6, numeral 31 denotes a content database (referred to in the following as "content DB"). Output that is reproduced from the content DB 31 is supplied to a voice input portion 32, a file processing portion 35 and a recording portion 37. The output of the voice input portion 32 is supplied to a voice recognition portion 33. Data from a dictionary database (referred to as "dictionary DB" in the following) 34 can be supplied to the voice recognition portion 33. Metadata is output from the voice recognition portion 33 and input into the file processing portion 35. Using a time code value supplied from the content DB 31, predetermined data is appended to the metadata output from the voice recognition portion 33, which is processed into a file with this format by the file processing portion 35. The metadata file that is output from the file processing portion 35 is supplied to the recording portion 37, and recorded together with the content that is output from the content DB 31. The voice input portion 32 is provided with a voice input terminal 39, and the dictionary DB 34 is provided with a dictionary field selection input terminal 40. The reproduction output from the content DB 31 and the reproduction output from the recording portion 37 can be displayed with a video monitor 41.

The content DB 31 has a configuration for providing a function for reproducing created content while issuing a time code adapted to the content, which may be, for example, a video/audio signal reproduction device such as a VTR, a hard-disk device, or an optical disk device, a video/audio signal reproduction device using a memory means such as a semiconductor memory as a recording medium, or a video/audio signal reproduction device temporarily recording and reproducing video/audio signals that are supplied by transmission or broadcasting.

The following is an explanation of the operation of this metadata production device. A video signal with attached time code that is reproduced from the content DB 31 is supplied to the video monitor 41 and displayed. When the operator enters a narration voice signal using the microphone in accordance with the content displayed by the video monitor 41, the voice signal is input via the voice input terminal 39 into the voice input portion 32.

It is preferable that during this, the operator confirms the content displayed on the video monitor 41 or the time code, and utters keywords for content management that are abstracted based on the scenario, narration script or the video content or the like. It is possible to improve the recognition rate with the downstream voice recognition portion 33 by using, as the thus entered voice signals, only keywords that have been limited beforehand according to the scenario or the like.

At the voice input portion 32, the voice signal that is input from the voice input terminal 39 is converted into data with a clock that is synchronized with a vertical synchronization signal that is output from the content DB 31. The voice signal data that has been converted into data by the voice input portion 32 is input into the voice recognition portion 33, while at the same time the dictionary necessary for the voice recognition is supplied from the dictionary DB 34. The dictionary used for the voice recognition in the dictionary DB 34 can be set from the dictionary field selection input terminal 40.

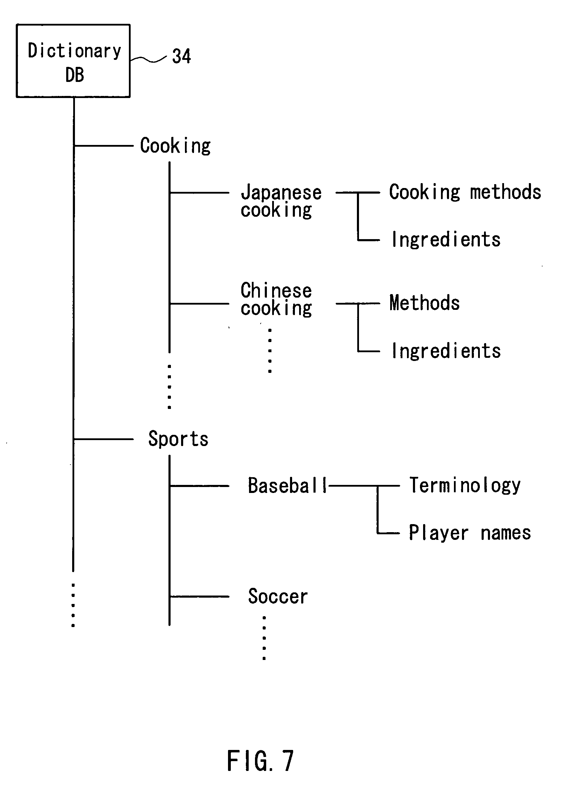

As shown in FIG. 7, for example, when the dictionary DB 34 is configured to have separate dictionaries for different fields, then the field to be used is set from the dictionary field selection input terminal 40 (for example, a keyboard terminal allowing key input). For example in the case of a cooking program, it is possible to set the field of the dictionary DB 34 from the terminal 40 to: Cooking - Japanese Cooking - Cooking Methods - Stir-frying Vegetables. By setting the dictionary DB 34 in this manner, the used terms and the terms to be voice-recognized can be limited, and the recognition rate of the voice recognition portion 33 can be improved.

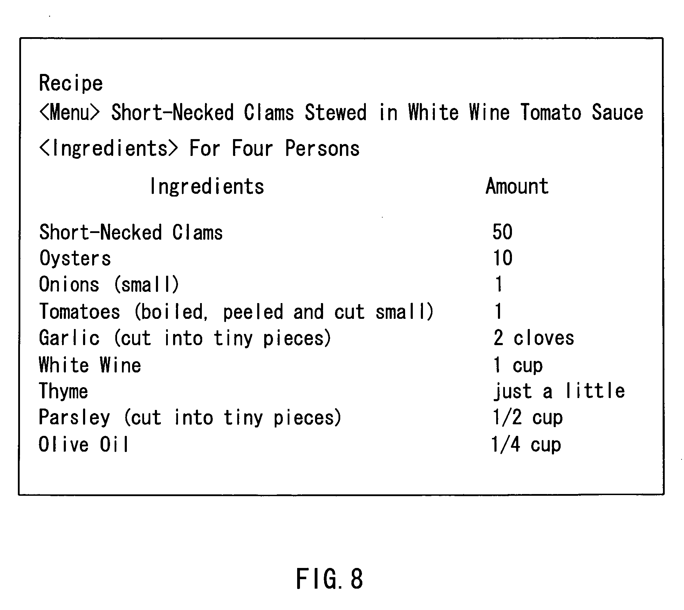

Moreover, from the dictionary field selection terminal 40 in FIG. 6, it is possible to input keywords extracted from the scenario, the scenario script or the content. For example, if the content is a cooking program, it is possible to input a recipe as shown in FIG. 8 from the terminal 40. Considering the content of the program, the possibility is high that the words that appear in the recipe will be input as voice signals, so that the recognition priority degree of the terms in the recipe input from the terminal 40 is specified clearly by the dictionary DB 34, and voice recognition for these terms is performed with priority. For example, if homonyms such as "KAKI", which can either mean "persimmon" or "oyster" in Japanese are included in the dictionary, and if the terms in the recipe entered from the terminal 40 include only the term "KAKI" (meaning "oyster"), then a priority rank of 1 is assigned to "KAKI" (meaning "oyster"). And if the utterance "KAKI" is recognized by the voice recognition portion 33, then this is recognized as "KAKI" (meaning "oyster"), to which a priority rank of 1 has been set in the dictionary DB 34.

Thus, it is possible to improve the recognition rate with the voice recognition portion 33 by limiting the terms in the dictionary DB 34 with the field that is input from the terminal 40, and by further inputting a scenario from the terminal 40 and clearly specifying the priority degree of terms.

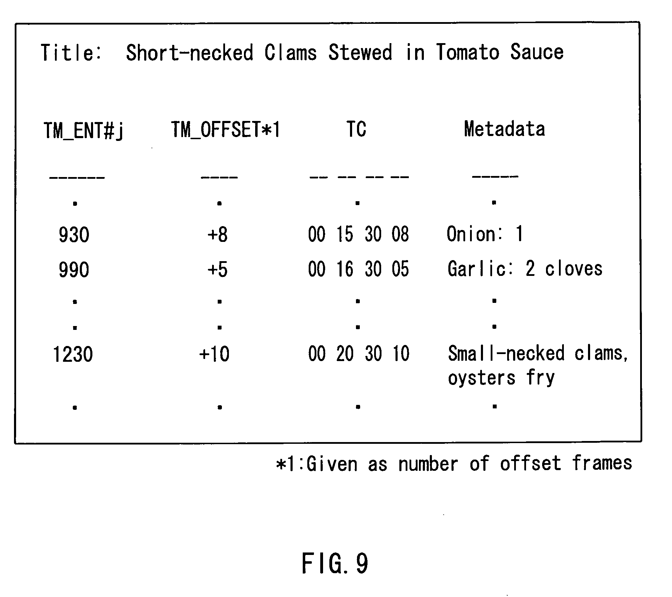

The voice recognition portion 33 in FIG. 6 recognizes the voice signal data that has been input from the voice input portion 32 in accordance with the dictionary supplied from the dictionary DB 34, and metadata is created. The metadata that is output from the voice recognition portion 33 is input into the file processing portion 35. As described above, the voice input portion 32 converts the voice signals into data in synchronization with a vertical synchronization signal that is reproduced from the content DB 31. Consequently, the file processing portion 35 outputs a metadata file of text format as shown in FIG. 9, in case of the above-noted cooking program, for example, using synchronization information from the voice input portion 32 and time code values that are supplied from the content DB 31. That is to say, TM_ENT (sec) which is a reference time measured in seconds from the start of the file, TM_OFFSET which indicates the frame offset number from the reference time, and a time code are appended by the file processing portion 35 to the metadata that is output from the voice recognition portion 33, and the metadata is processed into a file with this format.

The recording portion 37 records the metadata file that is output from the file processing portion 35 and the content that is output from the content DB 31. The recording portion 37 is configured by a HDD, a memory, an optical disk or the like, and records the content output from the content DB 31 also in file format.

### Embodiment 4

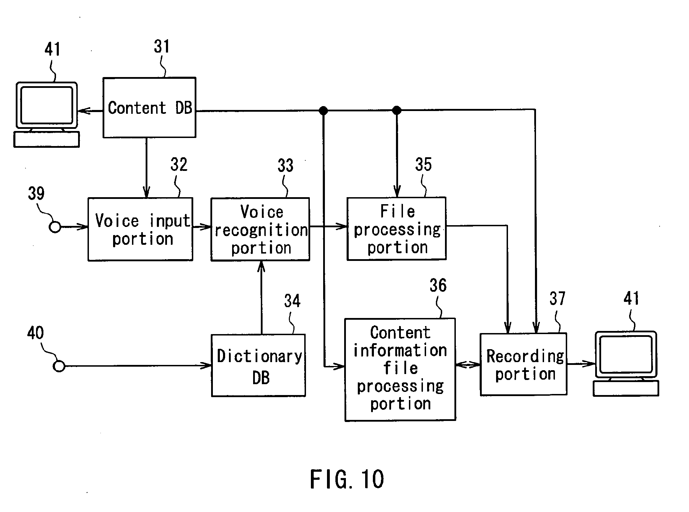

FIG. 10 is a block diagram showing the configuration of a metadata production device according to Embodiment 4 of the present invention. In the device of this embodiment, a content information file processing portion 36 is added to the configuration of Embodiment 3. The content information file processing portion 36 creates a control file indicating the recording positions of the content that is recorded with the recording portion 37, and this control file is recorded with the recording portion 37.

That is to say, based on the recording position information of the content that is output from the content DB 31 and of the content that is output from the recording portion 37, the content information file processing portion 36 generates time axis information for that content as well as information indicating an address relation of the content recorded in the recording portion 37, and converts the time axis information into data to be output as a control file.

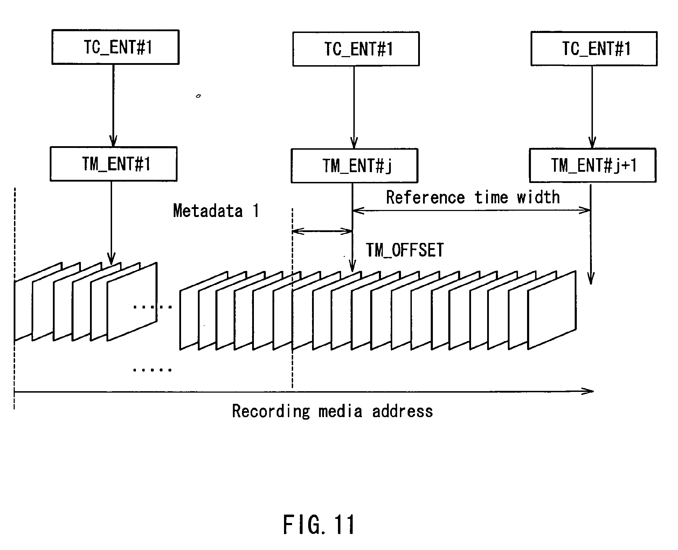

For example, as shown in FIG. 11, TM_ENT #j, which indicates a time axis reference of the content, is pointed at equal time axis intervals to the recording media addresses, which indicate the recording position of the content. For example, TM_ENT #j is pointed to the recording media address every second (30 frames in case of an NSTC signal). By mapping in this manner, even when the content is recorded dispersedly in units of 1 sec, it is possible to identify the recording address of the recording portion 37 unambiguously based on TM_ENT #j.

In a metadata file, as shown in FIG. 9, TM_ENT (sec) which is a reference time measured in seconds from the start of the file, TM_OFFSET which indicates the frame offset number from the reference time, the time code, and the metadata are recorded in text format. Consequently, if a metadata is specified in the metadata file, then the time code, the reference time and the frame offset value are known, so that the recording position in the recording portion 37 can be determined immediately from the control file shown in FIG. 11.

It should be noted that the equal time axis intervals of TM_ENT #j are not limited to pointing every second as noted above, and it is also possible to annotate in accordance with GOP units used in MPEG 2 compression or the like.

Furthermore, in NTSC television signals, the vertical synchronization signal is 60/1.001 Hz, so that it is also possible to use two kinds of time codes, namely a time code adapted to the drop-frame mode in accordance with absolute time or a non-drop time code in accordance with the vertical synchronization signal (60/1.001 Hz). In this case, the non-drop time code may be expressed by TM_ENT #j, and a time code corresponding to drop frame mode may be expressed by TC_ENT #j.

Furthermore, the conversion of the control file into data may be performed using an existing language such as SMIL 2. If the functionality of SMIL 2 is used, it also is possible to convert related content and the file name of the metadata file into data, and to store them in the control file.

Furthermore, although FIG. 11 shows a configuration in which the recording address of the recording portion is displayed directly, it is also possible to display, instead of the recording address, the data amount from the beginning of the content file to the current time code, so as to calculate and find the recording address corresponding to the time code at the recording portion based on the data amount and the recording address of the file system.

Moreover, a similar effect can be attained when a correspondence table of TM_ENT #j and the time codes is not stored in the metadata file but the correspondence table of TM_ENT #j and the time codes is stored in the control file.

### Embodiment 5

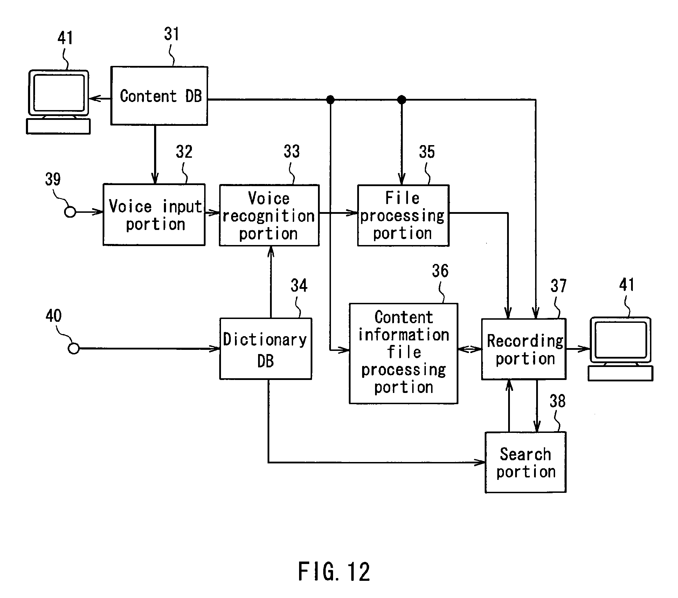

FIG. 12 is a block diagram showing the configuration of a metadata search device according to Embodiment 5 of the present invention. In the device of this embodiment, a search portion 38 is added to the configuration of Embodiment 4. With the search portion 38, the keywords for scenes to be searched are selected from a dictionary DB 34 that is identical to the one that was used for finding metadata by voice recognition, and those keywords are set.

Next, the search portion 38 searches the metadata items in the metadata files and displays a list of title names matching the keywords as well as positions (time codes) of the content scenes. If one specified scene is set from the list display, then the recording media address in the control file is automatically found from the reference time TM_ENT (sec) and the frame offset number TM_OFFSET of the metadata file and set in the recording portion 37, and the content scene recorded at that recording address is reproduced and displayed by the recording portion 37 on the monitor 41. With this configuration, the scene to be viewed can be found immediately when the metadata has been found.

It should be noted that if thumbnail files that are linked to the content are prearranged, then it is possible to reproduce and display representative thumbnail images of the content when displaying the above-noted list of content names matching the keywords.

### Embodiment 6

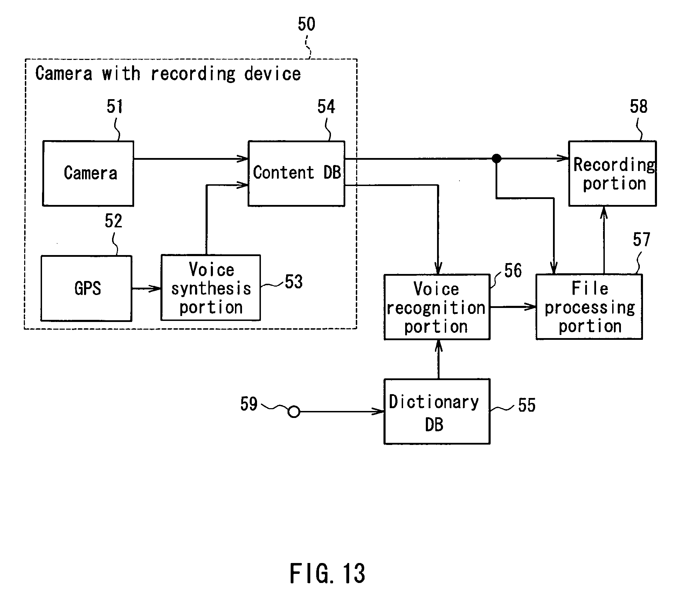

The foregoing Embodiments 3 to 5 were explained for a device in which metadata is attached to content that has been recorded beforehand, whereas the present embodiment relates to an example in which the present invention has been expanded to a system that attaches metadata when taking images with a camera or the like, and in particular a device that attaches metadata to image-taking positions when taking scenes whose content has been limited beforehand. FIG. 13 is a block diagram showing the configuration of a metadata production device according to Embodiment 6 of the present invention.

The imaged output of the camera 51 is recorded as video content in a content DB 54. At the same time, a GPS 52 detects the location at which the camera takes the images, this position information (geographic coordinates) are turned into voice signals by a voice synthesis portion 53, and recorded as position information by a voice channel of the content DB 54. The camera 51, the GPS 52, the voice synthesis portion 53 and the content DB 54 can be configured in an integrated manner as a camera 50 with recording portion. The content DB 54 inputs the voice signal position information recorded in the audio channel into a voice recognition portion 56. Also dictionary data from a dictionary DB 55 is supplied to the voice recognition portion 56. The dictionary DB 55 can be configured such that place names or landmarks or the like can be selected or restricted through keyboard input from a terminal 59, and output to the voice recognition portion 56.

The voice recognition portion 56 finds the place names or landmarks using the recognized geographical coordinates and the data of the dictionary DB 55 and outputs them to a file processing portion 57. The file processing portion 57 converts the time codes that are output from the content DB 54 as well as the place names and landmarks that are output from the voice recognition portion 56 as metadata into text, thus generating a metadata file. The metadata file is supplied to the recording portion 58, which records this metadata file as well as the content data that is output from the content DB 54.

With this configuration, metadata of place names and landmarks can be attached automatically to every scene that is taken.

In the foregoing embodiments, configurations were described in which keywords recognized by a voice recognition portion are turned into metadata files together with time codes, but it is also possible to add related keywords to the keywords recognized by the voice recognition portion and include them in the files. For example, when "Yodogawa River" has been voice recognized, then ordinary attributive keywords such as "topography" or "river" may be added. Thus, it becomes possible to use the added keywords "topography" or "river" when searching, so that the searchability is enhanced.

It should be noted that with the voice recognition portion of the present invention, it is possible to improve the voice recognition rate by using a word-based recognition method recognizing individual words, and limiting the number of words of the voice input and the number of words in the used recognition dictionary.

Furthermore, there is generally the possibility that false recognitions occur in the voice recognition. In the above-described embodiments, it is possible to provide an information processing portion, such as a computer including a keyboard, such that when a false recognition has occurred, the produced metadata or tag can be corrected by a keyboard operation.

### INDUSTRIAL APPLICABILITY

With the metadata production device of the present invention, metadata is produced by voice input using voice recognition and the metadata are associated with predetermined positions of the content in order to produce metadata or attach tags related to the content, so that the production of metadata or the attaching of tags can be accomplished more efficiently than with conventional keyboard input.

## Claims

1. A metadata production device, comprising:
a content reproduction portion that reproduces and outputs content;
a voice input portion;
a voice recognition portion that recognizes voice signals that are input from the voice input portion;
a metadata generation portion that converts information recognized by the voice recognition portion into metadata; and
an identification information attaching portion that obtains identification information for identifying positions within the content from the reproduced content that is supplied from the content reproduction portion and attaches the identification information to the metadata, whereby the generated metadata is associated with positions in the content.

2. The metadata production device according to claim 1,
further comprising a dictionary related to the content, wherein, to recognize the voice signals input from the voice input portion with the voice recognition portion, the recognition is performed in association with the dictionary.

3. The metadata production device according to claim 2,
wherein the voice signals are recognized by the voice recognition portion word by word in association with the dictionary.

4. The metadata production device according to claim 1 or 3,
further comprising an information processing portion including a keyboard, wherein the metadata can be corrected through the information processing portion by input from the keyboard.

5. The metadata production device according to any of claims 1 to 5,
wherein time code information that is attached to the content is used as the identification information.

6. The metadata production device according to any of claims 1 to 6,
wherein content addresses, numbers or frame numbers attached to the content are used as the identification information.

7. The metadata production device according to claim 1,
wherein the content is still-picture content, and the addresses of the still-picture content are used as the identification information.

8. The metadata production device according to claim 1, wherein
the content reproduction portion is configured by a content database;
the voice input portion supplies to the voice recognition portion voice signals of entered keywords that are converted into data with a clock signal that is synchronized with a synchronization signal supplied from the content database;
the voice recognition portion is configured to recognize the keywords from the voice signal data that have been converted into data by the voice input portion; and
the metadata generation portion is configured as a file processing portion that produces a metadata file by using, as the identification information, a time code that indicates a time position of an image signal included in the content, and combining the keywords that are output from the voice recognition portion with that time code.

9. The metadata production device according to claim 8,
further comprising a recording portion that records the content that is supplied from the content database together with the metadata file as a content file.

10. The metadata production device according to claim 9,
further comprising a content information file processing portion that generates a control file controlling the relation between the metadata file and recording positions at which the content file is to be recorded;
wherein the control file is recorded in the recording portion together with the content file and the metadata file.

11. The metadata production device according to claim 8,
further comprising a dictionary database, wherein the voice recognition portion can select a dictionary of a genre corresponding to the content from a plurality of genre-dependent dictionaries.

12. The metadata production device according to claim 11, wherein
keywords related to the content can be supplied to the voice recognition portion; and
the voice recognition portion is configured to recognize those keywords with higher priority.

13. A method for producing metadata, comprising: voice-inputting information related to a given content; subjecting the input voice signal to voice recognition with a voice recognition device; converting voice-recognized information into metadata; and attaching identification information provided to the content for identifying positions in the content to the metadata, thereby associating the generated metadata with the positions in the content.

14. The method for producing metadata according to claim 13,
wherein information related to the content is voice-input while displaying the content on a reproduction monitor.

15. The method for producing metadata according to claim 13,
wherein a dictionary related to the content is used, and the input voice signals are recognized by the voice recognition device through association with the dictionary.

16. The method for producing metadata according to claim 13,
wherein time code information that is attached to the content is used as the identification information.

17. The method for producing metadata according to claim 13,
wherein the content is still-picture content, and the addresses of the still-picture content are used as the identification information.

18. A metadata search device, comprising:
a content database that reproduces and outputs content;
a voice input portion that converts voice signals of entered keywords into data with a clock signal that is synchronized with a synchronization signal of the reproduced content;
a voice recognition portion that recognizes the keywords from the voice signal data that have been converted into data by the voice input portion;
a file processing portion that produces a metadata file by combining the keywords output from the voice recognition portion with time codes that indicate a time position of an image signal that is included in the content;
a content information file processing portion that generates a control file controlling a relation between the metadata file and recording positions of the content file;
a recording portion that records the content file, the metadata file and the control file; and
a search portion that extracts a recording position corresponding to a keyword in the content file by specifying the metadata files in which an entered search keyword is included, and referencing the control file;
wherein the recording position of the content file corresponds to the recording position in the recording portion.

19. The metadata search device according to claim 18,
wherein the control file that is output from the content information file processing portion is devised as a table that lists recording positions of content in the recording portion in accordance with a recording time of the content, and the recording position of the content can be searched from the time code.

20. The metadata search device according to claim 18,
further comprising a dictionary database, and a keyword supply portion that supplies keywords related to the content into the voice recognition portion;
wherein the voice recognition portion can select a dictionary of a genre corresponding to the content from a plurality of genre-dependent dictionaries, and the voice recognition portion is configured to recognize those keywords with higher priority.

21. The metadata search device according to claim 18,
further comprising a dictionary database;
wherein the voice recognition portion can select a dictionary of a genre corresponding to the content from a plurality of genre-dependent dictionaries; and
wherein the search portion is configured to search by keywords that are chosen from a common dictionary used by the voice recognition portion.

## Amended claims

### Amended claims under Art. 19.1 PCT

1. A metadata production device, comprising:
a content reproduction portion that reproduces and outputs content;
an voice input portion;
a voice recognition portion that recognizes voice signals that are input from the voice input portion;
a metadata generation portion that converts information recognized by the voice recognition portion into metadata;
an identification information attaching portion that obtains identification information for identifying positions within the content from the content and attaches the identification information to the metadata; and
a dictionary that is limited in accordance with the content;
whereby the generated metadata is associated with positions in the content; and
the recognition is performed in association with the dictionary, when recognizing the voice signals input from the voice input portion with the voice recognition portion.

2. The metadata production device according to claim 1,
wherein the voice signals are recognized by the voice recognition portion word by word in association with the dictionary.

3. The metadata production device according to claim 1 or 2,
further comprising an information processing portion including a keyboard, wherein the metadata can be corrected through the information processing portion by input from the keyboard.

4. The metadata production device according to any of claims 1 to 3,
wherein time code information that is attached to the content is used as the identification information.

5. The metadata production device according to any of claims 1 to 4,
wherein content addresses, numbers or frame numbers attached to the content are used as the identification information.

6. The metadata production device according to claim 1,
wherein the content is still-picture content, and the addresses of the still-picture content are used as the identification information.

7. The metadata production device according to claim 1, wherein
the content reproduction portion is configured by a content database;
the voice input portion supplies to the voice recognition portion voice signals of entered keywords that have been converted into data with a clock signal that is synchronized with a synchronization signal supplied from the content database;
the voice recognition portion is configured to recognize the keywords from the voice signal data that has been converted into data by the voice input portion; and
the metadata generation portion is configured as a file processing portion that produces a metadata file by using, as the identification information, a time code that indicates a time position of an image signal that is included in the content, and combining the keywords that are output from the voice recognition portion with that time code.

8. The metadata production device according to claim 7,
further comprising a recording portion that records the content that is supplied from the content database together with the metadata file as a content file.

9. The metadata production device according to claim 8,
further comprising a content information file processing portion that generates a control file controlling the relation between the metadata file and recording positions at which the content file is to be recorded;
wherein the control file is recorded in the recording portion together with the content file and the metadata file.

10. The metadata production device according to claim 7,
further comprising a dictionary database, wherein the voice recognition portion can select a dictionary of a genre corresponding to the content from a plurality of genre-dependent dictionaries.

11. The metadata production device according to claim 10,
wherein keywords related to the content can be supplied to the voice recognition portion; and
wherein the voice recognition portion is configured to recognize those keywords with higher priority.

12. A method for producing metadata, comprising: voice-inputting information related to a given content while displaying the content on a monitor; subjecting the input voice signal to voice recognition with a voice recognition device using a dictionary that is limited in accordance with the content; converting voice-recognized information into metadata; and attaching identification information provided to the content for identifying positions in the content to the metadata, thereby associating the generated metadata with the positions in the content.

13. The method for producing metadata according to claim 12,
wherein time code information that is attached to the content is used as the identification information.

14. The metadata production device according to claim 12,
wherein the content is still-picture content, and the addresses of the still-picture content are used as the identification information.

15. A metadata search device, comprising:
a content database that reproduces and outputs content;
an voice input portion that converts voice signals of entered keywords into data with a clock signal that is synchronized with a synchronization signal of the reproduced content;
a voice recognition portion that recognizes the keywords from the voice signal data that has been converted into data by the voice input portion;
a file processing portion that produces a metadata file by combining the keywords that are output from the voice recognition portion with time codes that indicate a time position of an image signal that is included in the content;
a content information file processing portion that generates a control file controlling a relation between the metadata file and recording positions of the content file;
a recording portion that records the content file, the metadata file and the control file; and
a search portion that extracts a recording position corresponding to a keyword in the content file by specifying the metadata files in which an entered search keyword is included, and referencing the control file;
wherein the recording position of the content file is the recording position in the recording portion.

16. The metadata search device according to claim 15,
wherein the control file that is output from the content information file processing portion is devised as a table that lists recording positions of content in the recording portion in accordance with a recording time of the content, and the recording position of the content can be searched from the time code.

17. The metadata search device according to claim 15,
further comprising a dictionary database, and a keyword supply portion that supplies keywords related to the content into the voice recognition portion;
wherein the voice recognition portion can select a dictionary of a genre corresponding to the content from a plurality of genre-dependent dictionaries, and the voice recognition portion is configured to recognize those keywords with higher priority.

18. The metadata search device according to claim 15,
further comprising a dictionary database;
wherein the voice recognition portion can select a dictionary of a genre corresponding to the content from a plurality of genre-dependent dictionaries; and
wherein the search portion is configured to search by keywords that are chosen from a common dictionary used by the voice recognition portion.
